# EUROPÄISCHE PATENTANMELDUNG

(11) **EP 4 325 257 A1**
(43) Veröffentlichungstag der Anmeldung: **21.02.2024**
(21) Anmeldenummer: 23178624.5
(22) Anmeldetag: 12.06.2023
(51) Int. Cl.: G01V 8/20, G01V 8/22

(54) **OPTISCHER SENSOR**

(30) Priorität: 17.08.2022 DE 202022104647 U
(71) Anmelder: Leuze electronic GmbH + Co. KG, 73277 Owen/Teck (DE)
(72) Erfinder: Feller, Bernhard, 86316 Friedberg (DE); Wendel, Dr. Simon, 73230 Kirchheim unter Teck (DE); Aldiek, Norbert, 73230 Kirchheim/Teck (DE); Pychal, Martin, 85221 Dachau (DE); Hörderich, Johann, 82291 Mammendorf (DE); Sillge, Ray, 80995 München (DE); Scheu, Thomas, 72660 Beuren (DE); Karaduman, Metin, 73278 Schlierbach (DE)
(74) Vertreter: Ruckh, Rainer Gerhard

(57) **Zusammenfassung**

Der erfindungsgemäße optische Sensor dient zur Erfassung von Objekten in einem Überwachungsbereich und weist wenigstens einen eine Sensorkomponente bildenden Lichtstrahlen (4) emittierenden Sender (5) und wenigstens einen eine Sensorkomponente bildenden, Lichtstrahlen (4) empfangenden Empfänger (6) auf. Der optische Sensor weist zwei Sensoreinheiten (2a, 2b) auf, die an gegenüberliegenden Rändern des Überwachungsbereichs angeordnet sind. Die Sensoreinheiten weisen die Sensorkomponenten des optischen Sensors auf. Wenigstens eine der Sensoreinheiten (2a, 2b) weist Entfernungserkennungsmittel auf, mittels derer der Abstand der Sensoreinheiten (2a, 2b) erfassbar ist. Abhängig von der erfassten Entfernung sind selbsttätig Sensorparameter einstellbar oder überprüfbar. Die Entfernungserkennungsmittel sind von einem Entfernungssensor in Form einer 3 D-TOF-Kamera (15) gebildet. Alternativ weisen die Entfernungserkennungsmittel eine Messstrecke auf, mittels derer nach einem Impulslaufzeitverfahren oder einer Phasenmessung der Abstand der Sensoreinheiten (2a, 2b) bestimmt wird. Dabei weist die Messstrecke in jeder Sensoreinheit (2a, 2b) wenigstens ein Sendeelement (17a, 17b) und wenigstens ein Empfangselement (18a, 18b) auf. Ein Sendeelement (17a) der ersten Sensoreinheit (2a) sendet einen Triggerstrahl (21) an ein Empfangselement (18b) der zweiten Sensoreinheit (2b), wodurch das Sendeelement (17b) der zweiten Sensoreinheit (2b) aktiviert wird und einen Messstrahl (22) zum Empfangselement (18a) der ersten Sensoreinheit (2a) sendet. In einer Rechnereinheit werden die Laufzeiten des Triggerstrahls (21) und des Messstrahls (22) ermittelt. Alternativ weisen die Entfernungserkennungsmittel eine Schnittstelle zur Signalübertragung zwischen den Sensoreinheiten (2a, 2b) auf, wobei die Signalintensität von an einer Sensoreinheit (2a, 2b) empfangenen Signalen als Maß für die Entfernung zwischen den Sensoreinheiten (2a, 2b) herangezogen wird.

## Beschreibung

Die Erfindung betrifft einen optischen Sensor zur Erfassung von Objekten in einem Überwachungsbereich.

Ein derartiger optischer Sensor umfasst Sensorkomponenten in Form wenigstens eines Lichtstrahlen emittierenden Senders und eines Lichtstrahlen empfangenden Empfängers. Die am Ausgang des Empfängers anstehenden Empfangssignale werden in einer Auswerteeinheit zur Generierung eines Objektfeststellungssignals herangezogen.

Der optische Sensor, auf welchen sich die vorliegende Erfindung bezieht, weist zwei Sensoreinheiten auf, die an gegenüberliegenden Rändern des Überwachungsbereichs angeordnet sind.

Ein Beispiel für einen derartigen optischen Sensor ist ein Lichtvorhang. Der Lichtvorhang weist typischerweise eine erste Sensoreinheit mit einem ersten Gehäuse auf, in welchem eine Reihenanordnung von Sendern vorgesehen ist, wobei diese Sender von einer Sendersteuerung gesteuert werden. Weiterhin ist eine zweite Sensoreinheit mit einem zweiten Gehäuse vorgesehen, wobei im zweiten Gehäuse eine Reihenanordnung von Empfängern sowie die Auswerteeinheit vorgesehen sind.

Jeweils ein Sender und ein diesem zugeordneter Empfänger bilden ein Sender-Empfänger-Paar. Bei freiem Überwachungsbereich treffen die Lichtstrahlen der Sender ungehindert auf den Empfänger des jeweiligen Sender-Empfänger-Paares. Bei einem Objekteingriff im Überwachungsbereich wird der Strahlengang der Lichtstrahlen wenigstens eines Senders unterbrochen.

In der Auswerteeinheit werden die im Verstärker verstärkten Empfangssignale der Empfänger jeweils mit einem Schwellwert bewertet. Liegt das Empfangssignal oberhalb des Schwellwerts wird der Strahlengang dieser Lichtstrahlen als frei gewertet. Liegt das Empfangssignal unterhalb des Schwellwerts wird der Strahlengang dieser Lichtstrahlen als unterbrochen gewertet.

Die Lichtvorhänge werden werkseitig mit bestimmten Strahlungsleistungen der Sender und bestimmten Empfängerempfindlichkeiten, d.h. Verstärkungen der Empfangssignale und Höhen der Schwellwerte, ausgestattet. Durch diese Sensorparameter ist der Lichtvorhang für eine bestimmte Entfernung der Sensoreinheit oder einem begrenzten Entfernungsbereich der Sensoreinheit ausgelegt.

In der Applikation ist es oft wünschenswert, die Entfernung der Sensoreinheit zu variieren, um verschieden große Überwachungsbereiche zu realisieren. Dies ist mit den fest eingestellten Sensorparametern des Lichtvorhangs nicht möglich.

Um die Flexibilität des Lichtvorhangs zu erhöhen, ist es bekannt, die Sensorparameter über DIP-Schalter, Anschlussbrücken oder sonstige Einstellmittel zu ändern. Dies erfordert jedoch zeitaufwändige Einstellvorgänge. Zudem sind die Einstellmöglichkeiten begrenzt.

Der Erfindung liegt die Aufgabe zugrunde, einen optischen Sensor der eingangs genannten Art bereitzustellen, welcher eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen beschrieben.

Der erfindungsgemäße optische Sensor dient zur Erfassung von Objekten in einem Überwachungsbereich und weist wenigstens einen eine Sensorkomponente bildenden Lichtstrahlen emittierenden Sender und wenigstens einen eine Sensorkomponente bildenden, Lichtstrahlen empfangenden Empfänger auf. Der optische Sensor weist zwei Sensoreinheiten auf, die an gegenüberliegenden Rändern des Überwachungsbereichs angeordnet sind. Die Sensoreinheiten weisen die Sensorkomponenten des optischen Sensors auf. Wenigstens eine der Sensoreinheiten weist Entfernungserkennungsmittel auf, mittels derer der Abstand der Sensoreinheiten erfassbar ist. Abhängig von der erfassten Entfernung sind selbsttätig Sensorparameter einstellbar oder überprüfbar. Die Entfernungserkennungsmittel sind von einem Entfernungssensor in Form einer 3 D-TOF-Kamera gebildet. Alternativ weisen die Entfernungserkennungsmittel eine Messstrecke auf, mittels derer nach einem Impulslaufzeitverfahren oder einer Phasenmessung der Abstand der Sensoreinheiten bestimmt wird. Dabei weist die Messstrecke in jeder Sensoreinheit wenigstens ein Sendeelement und wenigstens ein Empfangselement auf. Ein Sendeelement der ersten Sensoreinheit sendet einen Triggerstrahl an ein Empfangselement der zweiten Sensoreinheit, wodurch das Sendeelement der zweiten Sensoreinheit aktiviert wird und einen Messstrahl zum Empfangselement der ersten Sensoreinheit sendet. In einer Rechnereinheit werden die Laufzeiten des Triggerstrahls und des Messstrahls ermittelt. Alternativ weisen die Entfernungserkennungsmittel eine Schnittstelle zur Signalübertragung zwischen den Sensoreinheiten (2a, 2b) auf, wobei die Signalintensität von an einer Sensoreinheit (2a, 2b) empfangenen Signalen als Maß für die Entfernung zwischen den Sensoreinheiten (2a, 2b) herangezogen wird.

Der erfindungsgemäße optische Sensor kann zu Überwachungszwecken eingesetzt werden. Dann erfasst der optische Sensor, ob ein Objekt im Überwachungsbereich vorhanden ist. In diesem Fall weist dieser eine Auswerteeinheit auf, in welcher abhängig von Empfangssignalen des Empfängers ein Objektfeststellungssignal generiert wird.

Der erfindungsgemäße optische Sensor kann alternativ zur Informationsübertragung genutzt werden.

Der Grundgedanke der Erfindung besteht darin, mit den Entfernungserkennungsmitteln die Entfernung der Sensoreinheiten, d.h. den Abstand der Sensoreinheiten zu bestimmen, wobei abhängig von der bestimmten Entfernung selbsttätig Sensorparameter, die für die Objektedetektion erforderlich sind, im optischen Sensor eingestellt werden.

Damit wird eine hohe Funktionalität des optischen Sensors realisiert. Die Sensoreinheiten des optischen Sensors begrenzen generell den Überwachungsbereich. Durch eine Änderung des Abstands der Sensoreinheit kann die Größe des Überwachungsbereichs variiert werden. Dadurch ist eine Anpassung des optischen Sensors an unterschiedliche Applikationen möglich.

Mit den Entfernungserkennungsmitteln wird der Abstand zwischen den Sensoreinheiten bestimmt. Dabei ist eine exakte Abstandsbestimmung vorteilhaft, jedoch nicht zwingend nötig. Für eine Anpassung der Sensorparameter an die Entfernung der Sensoreinheit reicht sogar eine Abstandsschätzung aus, da ausgewählte Sensorparameter typischerweise nicht für nur einen Abstand der Sensoreinheit ausgelegt sind, sondern für einen oder mehrere Abstandsbereiche.

Vorteilhaft ist, dass mit den Entfernungserkennungsmitteln ein großer Abstandbereich erfasst werden kann, so dass dementsprechend der Abstand der Sensoreinheit und damit die Größe des Überwachungsbereichs in einem großen Bereich variiert werden kann.

Erfindungsgemäß wird im optischen Sensor abhängig von der gemessenen Entfernung der Sensoreinheiten eine Einstellung der für die Objektdetektion relevanten Sensorparameter vorgenommen, so dass für jede Entfernung eine sichere Objektdetektion gewährleistet ist.

Vorteilhaft ist hierzu eine Rechnereinheit vorgesehen, die die Messergebnisse der Entfernungserkennungsmittel auswertet und abhängig hiervon die Einstellung der Sensorparameter vornimmt. Die Rechnereinheit kann Bestandteil der Entfernungserkennungsmittel sein. Auch ist es möglich, Rechnereinheiten der Auswerteeinheit oder einer Sendersteuerung hierfür zu nutzen.

Ein wesentlicher Vorteil besteht darin, dass die Anpassung der Sensorparameter an unterschiedliche Entfernungen der Sensoreinheiten selbsttätig erfolgt, d.h. es müssen hierfür keine durch Benutzer betätigbaren Einstellmittel vorgesehen sein.

Vorteilhaft sind als Sensorparameter Sendeleistungen des oder der Sender vorgesehen. Alternativ oder zusätzlich können als Sensorparameter Empfindlichkeiten des oder der Empfänger vorgesehen sein. Die Empfindlichkeit eines Empfängers kann durch die Verstärkung des Empfangssignals dieses Empfängers und/oder durch einen Schwellwert, mit dem das Empfangssignal bewertet wird, gegeben sein. Eine weitere Alternative ist es, die Öffnungswinkel des oder der Sender und/oder des oder der Empfänger anzupassen, wenn entsprechende Verstelleinrichtungen in den Sensoreinheiten vorgesehen werden. Das kann z.B. durch das Bewegen von Sender- und oder Empfängerlinsen umgesetzt werden.

Vorteilhaft sind die Entfernungserkennungsmittel in der Sensoreinheit integriert, in der der oder die Empfänger des optischen Sensors angeordnet sind, so dass in dieser Sensoreinheit anhand der Messwerte der Entfernungserkennungsmittel die Empfängerempfindlichkeiten eingestellt werden können. Zur Einstellung der Sendeleistungen der Sender können die Messergebnisse oder direkt die Parametereinstellungen über eine berührungslos arbeitende Schnittstelle der Sensoreinheit mit den Sendern zugeführt werden. Sind die Entfernungserkennungsmittel in der Sensoreinheit mit dem oder den Sendern integriert, können Parametereinstellungen über die Lichtstrahlen der Sender oder über eine berührungslos arbeitende Schnittstelle an die Sensoreinheit mit den Empfängern gesendet werden, um damit die Empfängerempfindlichkeiten einzustellen.

Gemäß einer ersten Ausgestaltung kann der optische Sensor ein optisches Datenübertragungssystem sein.

Vorteilhaft ist dann, dass in jeder Sensoreinheit ein Sender und ein Empfänger vorhanden ist.

Der so ausgebildete optische Sensor bildet dann eine Datenlichtschranke, mittels derer auf optischen Weg eine bidirektionale Datenübertragung möglich ist. In diesem Fall können auch Signalkodierungen und/oder Bandbreiten der Signalübertragung als Sensorparameter an die ermittelte Entfernung angepasst werden.

Gemäß einer weiteren Ausgestaltung ist der optische Sensor eine Lichtschranke, welche eine Sensoreinheit mit einem Sender und eine Sensoreinheit mit einem Empfänger aufweist.

Gemäß einer Variante hierzu ist der optische Sensor eine Reflexions-Lichtschranke, welche eine erste Sensoreinheit mit einem Sender und einem Empfänger und eine zweite Sensoreinheit in Form eines Reflektors aufweist.

Gemäß einer besonders vorteilhaften Ausführungsform ist der optische Sensor ein Lichtvorhang.

Zweckmäßig weist der Lichtvorhang eine Anzahl von Sender-Empfänger-Paaren auf, wobei jedes Sender-Empfänger-Paar einen Sender und einen Empfänger aufweist.

Wie bei einer Lichtschranke oder Reflexions-Lichtschranke erfolgt die Objektdetektion durch Strahlunterbrechung von Lichtstrahlen.

Gemäß einer ersten Variante ist eine erste Sensoreinheit mit einer Reihenanordnung von Sendern und eine zweite Sensoreinheit mit einer Reihenanordnung von Empfängern vorhanden.

Gemäß einer zweiten Variante sind zwei Sensoreinheiten mit jeweils einer Reihenanordnung von Sender und Empfängern vorhanden.

Auch hier bildet jeweils ein Sender einer Sensoreinheit mit einem Empfänger der anderen Sensoreinheit ein Sender-Empfänger-Paar bilden.

Gemäß einer Variante ist dieser ein Reflexions-Lichtvorhang.

In diesem Fall weist der optische Sensor eine erste Sensoreinheit mit einer Anordnung von Sendern und Empfängern und eine zweite Sensoreinheit in Form eines Reflektors auf.

Für den Einsatz im Bereich der Sicherheitstechnik ist der optische Sensor als Sicherheitssensor ausgebildet, d.h. dieser weist einen fehlersicheren Aufbau auf. Der fehlersichere Aufbau kann durch eine redundante Auswerteeinheit realisiert werden. Beispielweise kann die Auswerteeinheit von zwei sich gegenseitig zyklisch überwachenden Rechnereinheiten gebildet sein.

Gemäß einer ersten Variante der Erfindung weisen die Entfernungserkennungsmittel eine Messstrecke auf, mittels derer nach einem Impulslaufzeitverfahren der Abstand der Sensoreinheit bestimmt wird.

Über die Messstrecke werden Sendepulse gesendet, deren Laufzeit zwischen den Sensoreinheiten ein direktes Maß für den Abstand zwischen den Sensoreinheiten liefert.

Dabei weist die Messstrecke in jeder Sensoreinheit ein Sendeelement und ein Empfangselement auf. Sendet ein Sendeelement der ersten Sensoreinheit einen Triggerstrahl an ein Empfangselement der zweiten Sensoreinheit, wird das Sendeelement der zweiten Sensoreinheit aktiviert, so dass es einen Messstrahl zum Empfangselement der ersten Sensoreinheit sendet. In einer Rechnereinheit werden die Laufzeiten des Triggerstrahls und des Messstrahls ermittelt.

Dabei besteht der Triggerstrahl und der Messstrahl jeweils aus einer Pulsfolge von Sendepulsen.

Vorteilhaft bei dieser Ausführungsform ist, dass in einer Sensoreinheit die Komponenten der Entfernungserkennungsmittel integriert sind, die die Entfernungsbestimmung mit Aussenden des Triggerstrahls auslösen und die die Entfernungsbestimmung durch Auswerten des Messstrahls durchführen. Dies ist insbesondere deshalb wesentlich, da das Aussenden des Triggerstrahl den Bezugspunkt für die Entfernungsmessung bildet.

Dabei kann die Entfernungsbestimmung durch eine Laufzeitmessung, Frequenzbestimmung oder eine Periodendauermessung erfolgen.

Gemäß einer weiteren Variante der Erfindung weisen die Entfernungserkennungsmittel einen Entfernungssensor in Form einer 3D-TOF-(time of flight) Kamera auf.

Gemäß einer weiteren Variante der Erfindung ist eine Schnittstelle zur Signalübertragung zwischen den Sensoreinheiten vorgesehen, wobei die Signalintensität von an einer Sensoreinheit empfangenen Signalen als Maß für die Entfernung zwischen den Sensoreinheiten herangezogen wird.

Damit erfüllt die Schnittstelle eine Doppelfunktion derart, dass über diese nicht nur Signale, d.h. Informationen übertragen werden können. Vielmehr werden mit der Schnittstelle auch die Entfernungserkennungsmittel ausgebildet.

Zweckmäßig ist die Schnittstelle eine Funkschnittstelle, eine Lichtschnittstelle oder eine Ultraschallsignalschnittstelle.

Die unterschiedlichen Ausführungsformen der Entfernungserkennungsmittel können bei dem erfindungsgemäßen optischen Sensor einzeln oder in Kombination eingesetzt werden.

Prinzipiell ist es möglich mit den Entfernungserkennungsmitteln den Abstand der Sensoreinheit zu ermitteln und abhängig davon die Sensorparameter einzustellen.

Generell kann auch mittels der Entfernungserkennungsmittel eine Unterscheidung einer Anzahl von Entfernungsbereichen erfolgen.

Dies stellt eine besonders effiziente Ausführungsform dar. In diesem Fall können einzelnen Entfernungsbereichen unterschiedliche Parametersätze von Sensorparameter zugeordnet werden. Mit den Entfernungserkennungsmitteln braucht dann nur noch ermittelt werden, in welchem Entfernungsbereich der aktuell ermittelte Abstand der Sensoreinheit fällt, worauf die dem Entfernungsbereich zugeordneten Sensorparameter ausgewählt werden.

Alternativ ist es auch möglich, Entfernungsbereiche durch Einstellmittel vorzugeben und diese mittels der Entfernungserkennungsmittel zu überprüfen.

Beispielsweise können Einstellmittel in Form von Kabelbrücken vorhanden sein.

Vorteilhaft erfolgt die Entfernungsbestimmung mittels der Entfernungserkennungsmittel während einer Einlernphase.

Dabei kann die Einlernphase durch Betätigung von Einstellmitteln oder automatisch gestartet werden.

Gemäß einer vorteilhaften Weiterbildung weist der optische Sensor einen nicht flüchtigen Speicher auf, in welchem Geometriedaten des optischen Sensors gespeichert sind, wobei diese zur Entfernungsbestimmung mittels der Entfernungserkennungsmittel nutzbar sind.

Vorteilhaft sind die Geometriedaten im nichtflüchtigen Speicher fehlersicher gespeichert.

Gemäß einer weiteren vorteilhaften Ausführungsform wird mittels der Entfernungserkennungsmittel die Ausrichtqualität der relativen Ausrichtung der Sensoreinheit ermittelt.

Dabei ist die ermittelte Ausrichtqualität mittels Anzeigemitteln anzeigbar.

Die mit den Entfernungserkennungsmitteln des optischen Sensors ermittelten Messwerte und auch die damit ermittelten Sensorparameter können für eine zentrale Auswertung an eine externe Einheit übermittelt werden.

Die Erfindung wird im Folgenden anhand der Zeichnungen erläutert.

Es zeigen:
- Figur 1:: Erstes Ausführungsbeispiel des erfindungsgemäßen optischen Sensors in Form eines Lichtvorhangs.
- Figur 2:: Sendeseitige Komponenten des Lichtvorhangs gemäß Figur 1.
- Figur 3:: Empfangsseitige Komponenten des Lichtvorhangs gemäß Figur 1.
- Figur 4:: Zweites Ausführungsbeispiel des erfindungsgemäßen optischen Sensors eines Lichtvorhangs.
- Figur 5:: Drittes Ausführungsbeispiel des erfindungsgemäßen optischen Sensors eines Reflexions-Lichtvorhangs.
- Figur 6:: Lichtvorhang gemäß Figur 1 mit ersten Entfernungserkennungsmitteln.
- Figur 7:: Lichtvorhang gemäß Figur 1 mit zweiten Entfernungserkennungsmitteln.
- Figur 8:: Lichtvorhang gemäß Figur 1 mit dritten Entfernungserkennungsmitteln.

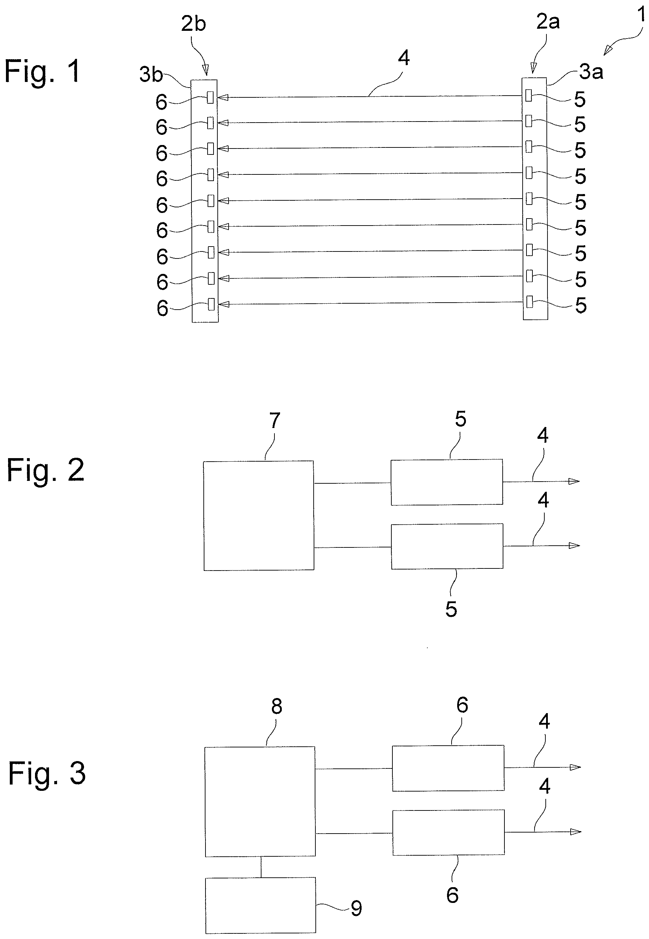

Figur 1 zeigt ein erstes Ausführungsbeispiel des erfindungsgemäßen optischen Sensors. Der optische Sensor kann generell in Form einer Lichtschranke, einer Reflexions-Lichtschranke oder in Form eines Datenübertragungssystems, beispielsweise einer Datenlichtschranke ausgebildet sein. Bei der in Figur 1 dargestellten Ausführungsform ist der optische Sensor ein Lichtvorhang 1.

Der Lichtvorhang 1 weist eine erste Sensoreinheit 2a mit einem Gehäuse 3a auf, in welchem eine Reihenanordnung von Lichtstrahlen 4 emittierenden Sendern 5 integriert ist. Die Sender 5 sind, wie auch in den folgenden Ausführungsbeispielen identisch ausgebildet und bestehen aus Leuchtdioden, denen jeweils eine Optik zugeordnet sein kann.

Der Lichtvorhang 1 weist weiterhin eine zweite Sensoreinheit 2b mit einem weiteren Gehäuse 3b auf, in welchem eine Reihenanordnung von Lichtstrahlen 4 empfangenden Empfängern 6 integriert ist. Die Empfänger 6 sind, wie auch in den folgenden Ausführungsbeispielen, identisch ausgebildet und bestehen aus Photodioden, denen jeweils eine Optik zugeordnet sein kann.

Die Sensoreinheiten 2a, 2b sind an gegenüberliegenden Rändern eines Überwachungsbereichs angeordnet, innerhalb dessen Objekte mit dem Lichtvorhang 1 erfassbar sind.

Die Anzahl der Sender 5 und Empfänger 6 ist nicht auf die in Figur 1 dargestellte Anzahl begrenzt. Prinzipiell kann auch nur ein Sender 5 und ein Empfänger 6 vorgesehen sein. Dann bildet der Lichtvorhang 1 eine Lichtschranke.

Figur 2 zeigt senderseitige Elektronikkomponenten der Sensoreinheit 2a. Dort ist eine Sendersteuerung 7 in Form einer Rechnereinheit vorgesehen, die die einzelnen Sender 5 steuert, wobei in Figur 2 nur zwei der Sender 5 des Lichtvorhangs 1 dargestellt sind.

Figur 3 zeigt empfangsseitige Elektronikkomponenten der Sensoreinheit 2a. Dort ist eine Auswerteeinheit 8 vorgesehen, die zur Steuerung der Empfänger 6 und zur Auswertung der Empfangssignale der Empfänger 6 dient, wobei in Figur 3 nur zwei der Empfänger 6 dargestellt sind. Die Auswerteeinheit 8 besteht im einfachsten Fall aus einer Rechnereinheit. Ist der Lichtvorhang 1 als Sicherheitssensor ausgebildet, besteht die Auswerteeinheit 8 beispielsweise aus zwei sich gegenseitig zyklisch überwachenden Rechnereinheiten. Die Auswerteeinheit 8 ist mit einem nicht flüchtigen Speicher 9 verbunden. Dort können Geometriedaten des Lichtvorhangs 1 gespeichert werden. Vorteilhaft erfolgt die Speicherung der Geometriedaten fehlersicher, beispielsweise durch Absicherung mit Prüfnummern, wie CRC-Prüfsummen oder durch eine redundante zweikanalige Speicherung.

Der Lichtvorhang 1 arbeitet nach dem Lichtschrankenprinzip. Jedem Sender 5 ist ein Empfänger 6 zugeordnet und bildet mit dem zugehörigen Sender 5 ein Sender-Empfänger-Paar. Bei freiem Überwachungsbereich treffen die Lichtstrahlen 4 aller Sender 5 auf den zugeordneten Empfänger 6. Bei einem Objekteingriff im Überwachungsbereich wird der Strahlengang der Lichtstrahlen 4 wenigstens eines Senders 5 unterbrochen.

Die Empfangssignale der Empfänger 6 werden jeweils in einem Verstärker verstärkt und dann mit einem Schwellwert bewertet. Liegt das Empfangssignal oberhalb des Schwellwerts liegt ein freier Strahlengang vor. Liegt das Empfangssignal unterhalb des Schwellwerts liegt eine Strahlunterbrechung vor.

Abhängig hiervon wird in der Auswerteeinheit 8 ein Objektfeststellungssignal in Form eines binären Schaltsignals generiert, dessen Schaltzustände angeben, ob ein Objekt im Überwachungsbereich vorhanden ist oder nicht.

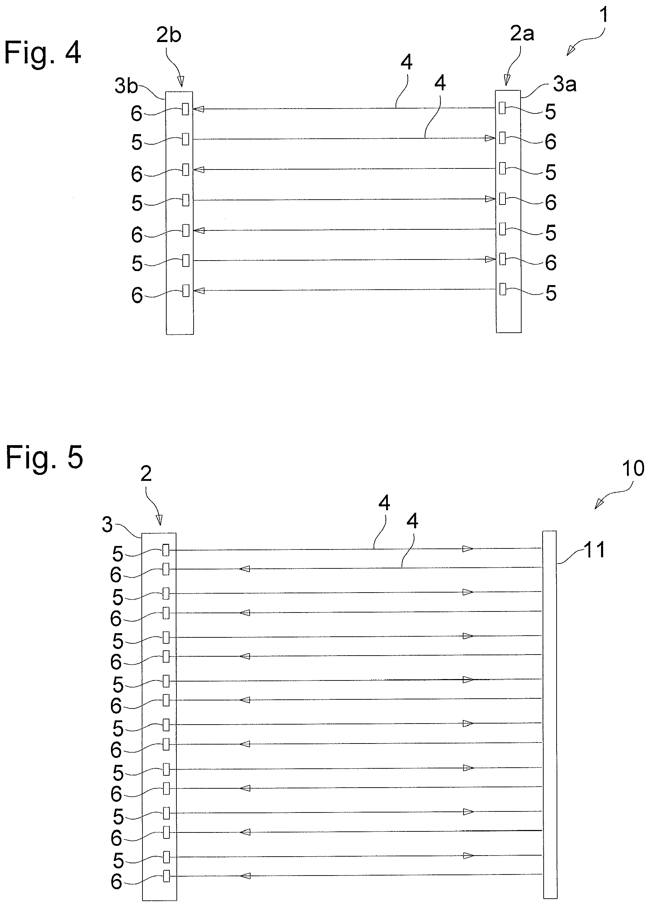

Figur 4 zeigt eine Variante des Lichtvorhangs 1 gemäß Figur 2. In diesem Fall ist in jeder Sensoreinheit 2a, 2b eine alternierende Folge von Sendern 5 und Empfängern 6 vorgesehen. Die Lichtstrahlen 4 eines Senders 5 einer Sendereinheit 2a, 2b werden bei freiem Überwachungsbereich an den jeweils zugeordneten Empfänger 6 der anderen Sensoreinheit 2b, 2a gesendet.

Figur 5 zeigt einen optischen Sensor in Form eines Reflexions-Lichtvorhangs 10. In diesem Fall ist eine Sensoreinheit 2 mit einem Gehäuse 3 vorgesehen, in dem mehrere nebeneinander liegende Paare von Sendern 5 und Empfängern 6 vorgesehen sind. Die Sensoreinheit 2 befindet sich an einem Rand des Überwachungsbereichs. Am anderen Rand des Überwachungsbereichs befindet sich ein Reflektor 11, insbesondere ein Retroreflektor, der auch eine Sensoreinheit 2 bildet.

Bei freiem Überwachungsbereich werden die Lichtstrahlen 4 eines Senders 5 zum Reflektor 11 und von dort zurück zum zugeordneten Empfänger 6 geführt.

Die Funktionsweise der optischen Sensoren gemäß den Figuren 4 und 5 entsprechen der Funktionsweise des Lichtvorhangs 1 gemäß den Figuren 1 bis 3.

Erfindungsgemäß wird mit Entfernungserkennungsmitteln den Abstand der Sensoreinheiten 2a, 2b bestimmt. Abhängig hiervon werden im optischen Sensor selbsttätig, vorzugsweise mittels einer Rechnereinheit, Sensorparameter eingestellt. Als Sensorparameter können die Sendeleistungen der Sender und/oder Empfängerempfindlichkeiten, gegeben durch Empfangssignalverstärkungen oder Höhen der Schwellwerte, vorgesehen sein.

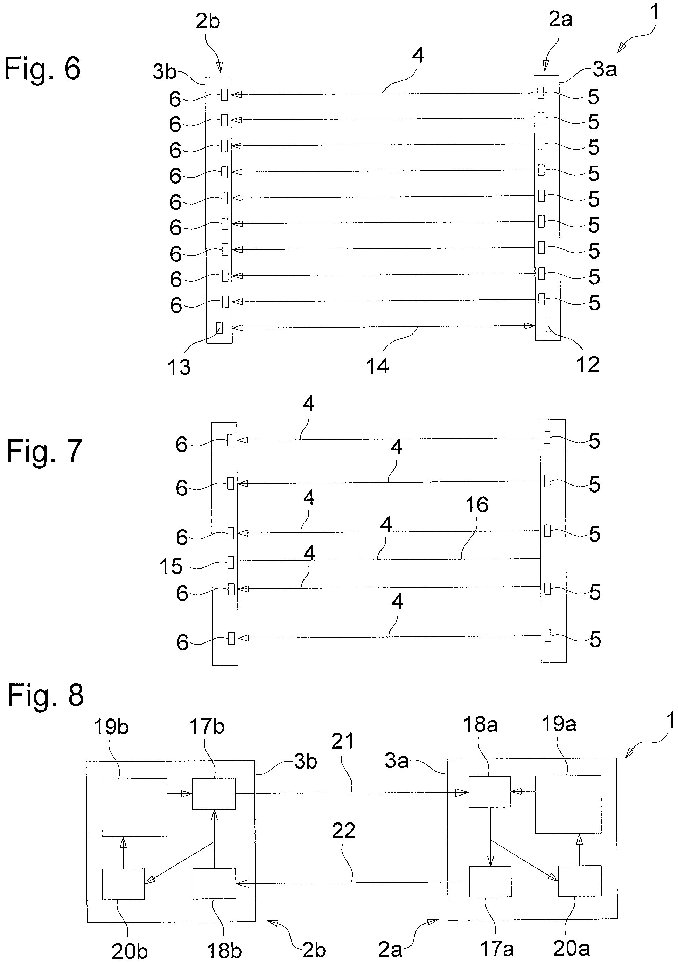

Figur 6 zeigt eine Weiterbildung des Lichtvorhangs 1 gemäß Figur 1. Der Lichtvorhang 1 gemäß Figur 6 weist eine Schnittstelle auf, die ein erstes Schnittstellenelement 12 in der ersten Sensoreinheit 2a und ein zweites Schnittstellenelement 13 in der zweiten Sensoreinheit 2b aufweist. Jedes Schnittstellenelement 12, 13 ist in Form einer Funksende-/empfangseinheit ausgebildet. Über die Schnittstelle werden bidirektional Daten übertragen, die Funksignalen 14 der Funksende-/empfangseinheiten aufkodiert sind.

Erfindungsgemäß werden die Schnittstellenelemente 12, 13 als Entfernungserkennungsmittel genutzt, indem empfangsseitig die Signalintensität der Funksignale 14 als Maß für die Entfernung der Schnittstellenelemente 12, 13 ausgewertet wird.

Figur 7 zeigt den Lichtvorhang 1 gemäß Figur 1 mit einer 3D-TOF-Kamera 15 als Entfernungserkennungsmittel. Die 3D-TOF-Kamera 15 emittiert Lichtpulse 16. Durch ein Impuls-Laufzeit-Verfahren erfolgt die Distanzbestimmung zwischen den Sensoreinheiten 2a, 2b.

Figur 8 zeigt eine weitere Ausführungsform von Entfernungserkennungsmitteln für den Lichtvorhang 1 gemäß Figur 1, der in Figur 8 in einer Querschnittsdarstellung gezeigt ist.

In diesem Fall weisen die Entfernungserkennungsmittel eine Messstrecke auf, mittels derer nach einem Impulslaufzeitverfahren oder Phasenunterschieds des Signals selbst oder von aufmodulierten Signalen der Abstand der Sensoreinheiten 2a, 2b bestimmt wird.

In der Sensoreinheit 2a sind ein Sendeelement 17a und ein Empfangselement 18a vorgesehen, die von einer Rechnereinheit in Form eines Controllers 19a gesteuert werden. Dem Controller 19a ist eine Messeinheit 20a zugeordnet.

In der Sensoreinheit 2b sind ein Sendeelement 17b und ein Empfangselement 18b vorgesehen, die von einer Rechnereinheit in Form eines Controllers 19b gesteuert werden. Dem Controller 19b ist eine Messeinheit 20b zugeordnet.

Dabei können die Sendeelemente 17a, 17b Licht, Hochfrequenzstrahlung oder Ultraschallwellen 16 emittieren.

Das Sendeelement 17b in der Sensoreinheit 2b emittiert einen Triggerstrahl 21 in Form einer Folge von Sendepulsen oder einen Sendepuls der oder die vom Empfangselement 18a der Sensoreinheit 2a empfangen werden. Dies wird im Controller 19a der Sensoreinheit 2a registriert, wodurch dieser das Sendeelement 17a aktiviert, so dass dieser einen Messstrahl 22 in Form eines oder mehrerer Sendepulse an das Empfangselement 18b der Sensoreinheit 2b sendet.

In den Messeinheiten 20a, 20b wird die Laufzeit der Sendepulse durch eine Frequenzmessung oder Periodendauermessung bestimmt, wodurch der Abstand der Sensoreinheit 2a, 2b bestimmt wird. Abhängig hiervon erfolgt die Einstellung der Sensorparameter des Lichtvorhangs 1.

### Bezugszeichenliste

- (1): Lichtvorhang
- (2): Sensoreinheit
- (2a): Sensoreinheit
- (2b): Sensoreinheit
- (3): Gehäuse
- (3a): Gehäuse
- (3b): Gehäuse
- (4): Lichtstrahlen
- (5): Sender
- (6): Empfänger
- (7): Sendersteuerung
- (8): Auswerteeinheit
- (9): Speicher
- (10): Reflexions-Lichtvorhang
- (11): Reflektor
- (12): Schnittstellenelement
- (13): Schnittstellenelement
- (14): Funksignal
- (15): 3D-TOF-Kamera
- (16): Lichtpuls
- (17a): Sendeelement
- (17b): Sendeelement
- (18a): Empfangselement
- (18b): Empfangselement
- (19a): Controller
- (19b): Controller
- (20a): Messeinheit
- (20b): Messeinheit
- (21): Triggerstrahl
- (22): Messstrahl

## Patentansprüche

1. Optischer Sensor zur Erfassung von Objekten in einem Überwachungsbereich mit wenigstens einem eine Sensorkomponente bildenden Lichtstrahlen (4) emittierenden Sender (5) mit wenigstens einem eine Sensorkomponente bildenden Lichtstrahlen (4) empfangenden Empfänger (6), **dadurch gekennzeichnet, dass** der optische Sensor zwei Sensoreinheiten (2, 2a, 2b) aufweist, die an Rändern des Überwachungsbereichs angeordnet sind, die die Sensorkomponenten des optischen Sensors aufweisen, wobei wenigstens eine der Sensoreinheiten (2, 2a, 2b) Entfernungserkennungsmittel aufweist, mittels derer der Abstand der Sensoreinheiten (2, 2a, 2b) erfassbar ist, und dass abhängig von der erfassten Entfernung selbsttätig Sensorparameter einstellbar oder überprüfbar sind, und dass die Entfernungserkennungsmittel von einem Entfernungssensor in Form einer 3 D-TOF-Kamera (15) gebildet sind, oder dass die Entfernungserkennungsmittel eine Messstrecke aufweisen, mittels derer nach einem Impulslaufzeitverfahren oder einer Phasenmessung der Abstand der Sensoreinheiten (2, 2a, 2b) bestimmt wird, wobei die Messstrecke in jeder Sensoreinheit (2, 2a, 2b) wenigstens ein Sendeelement (17a, 17b) und wenigstens ein Empfangselement (18a, 18b) aufweist, wobei ein Sendeelement (17a) der ersten Sensoreinheit (2a) einen Triggerstrahl (21) an ein Empfangselement (18b) der zweiten Sensoreinheit (2b) sendet, wodurch das Sendeelement (17b) der zweiten Sensoreinheit (2b) aktiviert wird und einen Messstrahl (22) zum Empfangselement (18a) der ersten Sensoreinheit (2a) sendet, wobei in einer Rechnereinheit die Laufzeiten des Triggerstrahls (21) und des Messstrahls (22) ermittelt werden, oder dass eine Schnittstelle zu Signalübertragung zwischen den Sensoreinheiten (2a, 2b) vorgesehen ist, wobei die Signalintensität von an einer Sensoreinheit (2a, 2b) empfangenen Signalen als Maß für die Entfernung zwischen den Sensoreinheiten (2a, 2b) herangezogen wird.

2. Optischer Sensor nach Anspruch 1, **dadurch gekennzeichnet, dass** der Triggerstrahl (21) und der Messstrahl (22) jeweils aus einer Pulsfolge von Sendepulsen bestehen.

3. Optischer Sensor nach Anspruch 2, **dadurch gekennzeichnet, dass** die Entfernungsbestimmung durch eine Frequenzbestimmung oder eine Periodendauermessung erfolgt.

4. Optischer Sensor nach einem der Ansprüche 1 bis 3, **dadurch gekennzeichnet, dass** die Sendeelemente (17a, 17b) Licht, Hochfrequenzstrahlung oder Ultraschallwellen Lichtpulse (16) emittieren.

5. Optischer Sensor nach einem der Ansprüche 1 bis 4, **dadurch gekennzeichnet, dass** die Schnittstelle eine Funkschnittstelle, eine Lichtschnittstelle oder eine Ultraschallsignalschnittstelle ist.

6. Optischer Sensor nach einem der Ansprüche 1 bis 5, **dadurch gekennzeichnet, dass** ein Sensorparameter eine Sendeleistung des Senders (5), eine Empfindlichkeit des Empfängers (6) oder ein Öffnungswinkel des Sende- und/oder Empfangslichts (13) ist.

7. Optischer Sensor nach einem der Ansprüche 1 bis 6, **dadurch gekennzeichnet, dass** dieser ein optisches Datenübertragungssystem ist.

8. Optischer Sensor nach einem der Ansprüche 1 bis 6, **dadurch gekennzeichnet, dass** dieser eine Lichtschranke ist, welche eine Sensoreinheit (2a) mit einem Sender (5) und eine Sensoreinheit (2b) mit einem Empfänger (6) aufweist, oder dass dieser eine Reflexions-Lichtschranke ist, welche eine erste Sensoreinheit (2a) mit einem Sender (5) und einem Empfänger (6) und eine zweite Sensoreinheit (2b) in Form eines Reflektors (11) aufweist.

9. Optischer Sensor nach einem der Ansprüche 1 bis 6, **dadurch gekennzeichnet, dass** dieser ein Lichtvorhang (1) oder ein Reflexions-Lichtvorhang (10) ist.

10. Optischer Sensor nach einem der Ansprüche 1 bis 9, **dadurch gekennzeichnet, dass** dieser ein Sicherheitssensor ist.

11. Optischer Sensor nach einem der Ansprüche 1 bis 10, **dadurch gekennzeichnet, dass** mittels der Entfernungserkennungsmittel eine Unterscheidung einer Anzahl von Entfernungsbereichen erfolgt.

12. Optischer Sensor nach Anspruch 11, **dadurch gekennzeichnet, dass** Entfernungsbereiche durch Einstellmittel vorgebbar sind und diese mittels der Entfernungserkennungsmittel überprüfbar sind.

13. Optischer Sensor nach einem der Ansprüche 11 oder 12, **dadurch gekennzeichnet, dass** Einstellmittel in Form von Kabelbrücken vorhanden sind.

14. Optischer Sensor nach einem der Ansprüche 1 bis 13, **dadurch gekennzeichnet, dass** die Entfernungsbestimmung mittels der Entfernungserkennungsmittel während einer Einlernphase erfolgt, wobei die Einlernphase durch Betätigung von Einstellmitteln erfolgt oder automatisch gestartet wird.

15. Optischer Sensor nach einem der Ansprüche 1 bis 14, **dadurch gekennzeichnet, dass** dieser einen nicht flüchtigen Speicher (9) aufweist, in welchem Geometriedaten des optischen Sensors gespeichert sind, wobei diese zur Entfernungsbestimmung mittels der Entfernungserkennungsmittel nutzbar sind.
